# EUROPEAN PATENT APPLICATION

(11) **EP 4 838 981 A1**
(43) Date of publication of application: **11.11.2026**
(21) Application number: 25751077.6
(22) Date of filing: 13.01.2025
(51) Int. Cl.: H04W 72/0453

(54) **COMMUNICATION METHOD AND COMMUNICATION APPARATUS**

(30) Priority: 07.02.2024 CN 202410175986
(71) Applicant: Huawei Technologies Co., Ltd., Shenzhen, Guangdong 518129 (CN)
(72) Inventor: XUE, Yifan, Shenzhen, Guangdong 518129 (CN); LONG, Yi, Shenzhen, Guangdong 518129 (CN); TIE, Xiaolei, Shenzhen, Guangdong 518129 (CN)
(74) Representative: Goddar, Heinz J.
(86) International application number: PCT/CN2025/072036
(87) International publication number: WO 2025/167475

(57) **Abstract**

This application provides a communication method and a communication apparatus. The method includes: An access network device sends a wake-up signal on a first frequency resource, and sends a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal. Center frequencies or a total bandwidth of a frequency resource (the first frequency resource) for sending the wake-up signal by the access network device and a frequency resource (the second frequency resource) for sending the synchronization signal by the access network device is defined, so that relative locations of the first frequency resource and the second frequency resource in frequency domain are agreed on, to control power consumption of a terminal device or reduce complexity.

## Description

This application claims priority to Chinese Patent Application No. 202410175986.X, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

With development of mobile communication technologies, mobile applications are increasingly diversified, and device functions are increasingly rich. Reducing energy consumption of a device becomes one of important technical objectives in a wireless network. In a procedure in which a terminal device receives paging, the terminal device may receive a paging-related message by using a separate low-power small circuit. The small circuit may be referred to as a wake-up circuit, a low-power circuit, a wake-up radio, or a wake-up receiver (low-power wake-up receiver, LP-WUR). A signal received by the wake-up circuit may be referred to as a low-power wake-up signal (low-power wake-up signal, LP-WUS).

To reduce power consumption of the wake-up circuit, the LP-WUS signal may be generally modulated by using on-off keying (on-off keying, OOK). A modulated LP-WUS signal may be distorted after passing through a channel, which affects correct receiving of the LP-WUS signal. To correctly receive the LP-WUS, a low-power synchronization signal (low-power synchronization signal, LP-SS) may be introduced to support a synchronization function of the wake-up receiver.

How to deploy a location relationship between the LP-WUS and the LP-SS in frequency domain is an urgent problem to be resolved.

### SUMMARY

This application provides a communication method and a communication apparatus. A location relationship between an LP-WUS and an LP-SS in frequency domain is defined, so that complexity of a terminal device can be reduced, and a waste of resources can be avoided.

According to a first aspect, a communication method is provided. The method may be performed by a network device, or may be performed by a chip or a circuit configured in a network device. This is not limited in this application.

The method may include: sending a wake-up signal on a first frequency resource, where the wake-up signal is used to wake up at least one terminal device; and sending a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

Based on the foregoing technical solution, center frequencies or a total bandwidth of a frequency resource (the first frequency resource) for sending a wake-up signal and a frequency resource (the second frequency resource) for sending a synchronization signal by the network device (for example, an access network device) is defined, so that relative locations of the first frequency resource and the second frequency resource in frequency domain are agreed on, to control power consumption of a terminal device or reduce complexity.

With reference to the first aspect, in some implementations of the first aspect, the total bandwidth is determined based on a smallest frequency resource index and a largest frequency resource index, the smallest frequency resource index is a smallest frequency resource index of the first frequency resource and the second frequency resource, and the largest frequency resource index is a largest frequency resource index of the first frequency resource and the second frequency resource.

In this technical solution, a frequency resource (the total bandwidth) indicated by the largest frequency resource index and the smallest frequency resource index in the first frequency resource and the second frequency resource is limited, to ensure that deployment of the first frequency resource and the second frequency resource in frequency domain does not exceed a specific range.

With reference to the first aspect, in some implementations of the first aspect, a bandwidth indicated by the smallest frequency resource index and the largest frequency resource index is less than or equal to the second threshold.

The smallest frequency resource index may be used as a start frequency resource index, and an end frequency resource index may be used as the largest frequency resource index. The bandwidth indicated by the smallest frequency resource index and the largest frequency resource index may be understood as a bandwidth indicated by the start frequency resource index and the end frequency resource index.

With reference to the first aspect, in some implementations of the first aspect, the center frequency of the first frequency resource is the same as the center frequency of the second frequency resource, and the first threshold is 0.

In this technical solution, the center frequency of the first frequency resource is the same as the center frequency of the second frequency resource. In other words, the difference between the center frequency of the first frequency resource and the center frequency of the second frequency resource is equal to 0, or the center frequency of the first frequency resource is aligned with the center frequency of the second frequency resource. A smaller difference between the center frequency of the first frequency resource and the center frequency of the second frequency resource indicates that the terminal device may receive the wake-up signal and the synchronization signal by using a smaller receive bandwidth. This helps reduce power consumption of the terminal device and reduce a waste of resources.

With reference to the first aspect, in some implementations of the first aspect, a first bandwidth corresponding to the wake-up signal is the same as a second bandwidth corresponding to the synchronization signal, where the first bandwidth is a sum of a bandwidth occupied by the wake-up signal and a guard band of the wake-up signal, and the second bandwidth is a sum of a bandwidth occupied by the synchronization signal and a guard band of the synchronization signal.

In this technical solution, the first bandwidth corresponding to the wake-up signal is the same as the second bandwidth corresponding to the synchronization signal, so that a resource that is easy to be scheduled can be reserved for another signal (for example, another signal other than an LP-WUS and an LP-SS). This helps reduce scheduling complexity of the network device.

With reference to the first aspect, in some implementations of the first aspect, the bandwidth occupied by the synchronization signal is less than the bandwidth occupied by the wake-up signal.

In this technical solution, when the bandwidth occupied by the synchronization signal is smaller, correspondingly, the guard band of the synchronization signal is larger, so that the terminal device can resist greater frequency offset interference before performing frequency synchronization by using the synchronization signal. In other words, when the guard band of the synchronization signal is larger, even if a large frequency offset exists, the terminal device can receive a complete synchronization signal, and does not receive interference (an interference signal is outside the guard band). This can avoid excessive impact on receiving performance (for example, synchronization performance, demodulation performance, and measurement performance).

With reference to the first aspect, in some implementations of the first aspect, first configuration information and second configuration information are sent, where the first configuration information indicates the center frequency of the first frequency resource, and the second configuration information indicates one of a start frequency unit, an end frequency unit, or a bandwidth of the second frequency resource; or the first configuration information indicates the center frequency of the second frequency resource, and the second configuration information indicates one of a start frequency unit, an end frequency unit, or a bandwidth of the first frequency resource.

In this technical solution, when the center frequency of the first frequency resource is the same as the center frequency of the second frequency resource, the network device may indicate a center frequency of either of the frequency resources, for example, configure two of a start frequency unit, an end frequency unit, or a bandwidth of either of the frequency resources, and the terminal device may determine a center frequency of the frequency resource based on two of the start frequency unit, the end frequency unit, or the bandwidth of the frequency resource; in addition, because the center frequencies of the two frequency resources are the same, the terminal device also learns of a center frequency of the other frequency resource. In this case, when configuring the other frequency resource, the network device may configure one of a start frequency unit, an end frequency unit, or a bandwidth, and may determine the other frequency resource based on the center frequency and one of the start frequency unit, the end frequency unit, or the bandwidth. Based on this configuration manner, configuration signaling overheads can be reduced.

With reference to the first aspect, in some implementations of the first aspect, the total bandwidth of the first frequency resource and the second frequency resource is less than or equal to the second threshold, and the first configuration information or the second configuration information further indicates the difference between the center frequency of the first frequency resource and the center frequency of the second frequency resource.

In this technical solution, the total bandwidth of the first frequency resource and the second frequency resource is less than or equal to the second threshold. The network device may indicate the center frequency of either of the frequency resources and the difference between the two center frequencies, for example, configure two of the start frequency unit, the end frequency unit, or the bandwidth of either of the frequency resources. The terminal device may determine the center frequency of the frequency resource based on two of the start frequency unit, the end frequency unit, or the bandwidth of the frequency resource. The terminal device also learns of the center frequency of the other frequency resource based on the difference between the two center frequencies. In this case, when configuring the other frequency resource, the network device may configure one of the start frequency unit, the end frequency unit, or the bandwidth, and may determine the other frequency resource based on the center frequency and one of the start frequency unit, the end frequency unit, or the bandwidth.

With reference to the first aspect, in some implementations of the first aspect, the total bandwidth of the first frequency resource and the second frequency resource is less than or equal to the second threshold, the first configuration information indicates two of a start frequency unit, an end frequency unit, or a bandwidth of the first frequency resource, and the second configuration information indicates two of a start frequency unit, an end frequency unit, or a bandwidth of the second frequency resource. It may be understood that the terminal device determines the first frequency resource based on two of the start frequency unit, the end frequency unit, or the bandwidth of the first frequency resource, and determines the second frequency resource based on two of the start frequency unit, the end frequency unit, or the bandwidth of the second frequency resource.

For example, the first configuration information and the second configuration information may be configured by using same configuration information, or may be separately configured by using two pieces of configuration information. This is not limited in embodiments of this application.

With reference to the first aspect, in some implementations of the first aspect, third configuration information is sent, where the third configuration information indicates the guard band of the wake-up signal or the guard band of the synchronization signal.

In this technical solution, when the first bandwidth corresponding to the wake-up signal is the same as the second bandwidth corresponding to the synchronization signal, the third configuration information may be used to configure a guard band of one signal (one of the wake-up signal or the synchronization signal). Correspondingly, the terminal device may determine, based on the first bandwidth corresponding to the wake-up signal being the same as the second bandwidth corresponding to the synchronization signal, a guard band of the other signal (the other one of the wake-up signal or the synchronization signal). In this case, this configuration manner can reduce configuration overheads.

For example, content of the third configuration information may be carried in the first configuration information and/or the second configuration information.

For example, the first configuration information includes the guard band of the wake-up signal, and the second configuration information includes the guard band of the synchronization signal.

For example, the third configuration information may alternatively be separately configured.

For example, the third configuration information may alternatively be configured together with the first configuration information and the second configuration information by using a same piece of configuration information.

The foregoing configuration manners are merely examples for description, and do not constitute a limitation on the protection scope of embodiments of this application.

With reference to the first aspect, in some implementations of the first aspect, in the total bandwidth, sending of another signal may be allowed, or sending of another signal may not be allowed. The another signal is another signal other than the LP-WUS and the LP-SS.

In this technical solution, when sending of another signal is not allowed in the total bandwidth, the terminal device may determine, based on the total bandwidth, one receive bandwidth to receive the LP-SS and the LP-WUS, and does not need to adjust a frequency location of the receive bandwidth. Therefore, complexity of the terminal is low. When sending of another signal is allowed in the total bandwidth, the terminal device may separately receive the LP-SS and the LP-WUS by using two small bandwidths, and an unused resource may be used to receive and transmit another NR signal, thereby avoiding a waste of resources.

With reference to the first aspect, in some implementations of the first aspect, the wake-up signal is a low-power wake-up signal LP-WUS, and the synchronization signal is a low-power synchronization signal LP-SS.

According to a second aspect, a communication method is provided. The method may be performed by a terminal device, or may be performed by a chip or a circuit configured in a terminal device. This is not limited in this application.

The method may include: receiving a wake-up signal on a first frequency resource, where the wake-up signal is used to wake up at least one terminal device; and receiving a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

Based on the foregoing technical solution, center frequencies or a total bandwidth of a frequency resource (the first frequency resource) for receiving a wake-up signal and a frequency resource (the second frequency resource) for receiving a synchronization signal by the terminal device is defined, so that relative locations of the first frequency resource and the second frequency resource in frequency domain are agreed on, to control power consumption of the terminal device or reduce complexity.

With reference to the second aspect, in some implementations of the second aspect, the total bandwidth is determined based on a smallest frequency resource index and a largest frequency resource index, the smallest frequency resource index is a smallest frequency resource index of the first frequency resource and the second frequency resource, and the largest frequency resource index is a largest frequency resource index of the first frequency resource and the second frequency resource.

In this technical solution, a frequency resource (the total bandwidth) indicated by the largest frequency resource index and the smallest frequency resource index in the first frequency resource and the second frequency resource is limited, to ensure that deployment of the first frequency resource and the second frequency resource in frequency domain does not exceed a specific range.

With reference to the second aspect, in some implementations of the second aspect, a bandwidth indicated by the smallest frequency resource index and the largest frequency resource index is less than or equal to the second threshold.

The smallest frequency resource index may be used as a start frequency resource index, and an end frequency resource index may be used as the largest frequency resource index. The bandwidth indicated by the smallest frequency resource index and the largest frequency resource index may be understood as a bandwidth indicated by the start frequency resource index and the end frequency resource index.

With reference to the second aspect, in some implementations of the second aspect, the center frequency of the first frequency resource is the same as the center frequency of the second frequency resource, and the first threshold is 0.

In this technical solution, the center frequency of the first frequency resource is the same as the center frequency of the second frequency resource. In other words, the difference between the center frequency of the first frequency resource and the center frequency of the second frequency resource is equal to 0, or the center frequency of the first frequency resource is aligned with the center frequency of the second frequency resource. A smaller difference between the center frequency of the first frequency resource and the center frequency of the second frequency resource indicates that the terminal device may receive the wake-up signal and the synchronization signal by using a smaller receive bandwidth. This helps reduce power consumption of the terminal device and reduce a waste of resources.

With reference to the second aspect, in some implementations of the second aspect, a first bandwidth corresponding to the wake-up signal is the same as a second bandwidth corresponding to the synchronization signal, where the first bandwidth is a sum of a bandwidth occupied by the wake-up signal and a guard band of the wake-up signal, and the second bandwidth is a sum of a bandwidth occupied by the synchronization signal and a guard band of the synchronization signal.

In this technical solution, the first bandwidth corresponding to the wake-up signal is the same as the second bandwidth corresponding to the synchronization signal, so that a resource that is easy to be scheduled can be reserved for another signal (for example, another signal other than an LP-WUS and an LP-SS). This helps reduce scheduling complexity of the network device.

With reference to the second aspect, in some implementations of the second aspect, the bandwidth occupied by the synchronization signal is less than the bandwidth occupied by the wake-up signal.

In this technical solution, when the bandwidth occupied by the synchronization signal is smaller, correspondingly, the guard band of the synchronization signal is larger, so that the terminal device can resist greater frequency offset interference before performing frequency synchronization by using the synchronization signal. In other words, when the guard band of the synchronization signal is larger, even if a large frequency offset exists, the terminal device can receive a complete synchronization signal, and does not receive interference (an interference signal is outside the guard band). This can avoid excessive impact on receiving performance (for example, synchronization performance, demodulation performance, and measurement performance).

With reference to the second aspect, in some implementations of the second aspect, first configuration information and second configuration information are received, where the first configuration information indicates a center frequency of a frequency resource for sending the wake-up signal, and the second configuration information indicates one of a start frequency-domain unit, an end frequency unit, or a bandwidth of a frequency resource for sending the synchronization signal; or the first configuration information indicates a center frequency of a frequency resource for sending the synchronization signal, and the second configuration information indicates one of a start frequency-domain unit, an end frequency unit, or a bandwidth of a frequency resource for sending the wake-up signal; and the first frequency resource and the second frequency resource are determined based on the first configuration information and the second configuration information.

In this technical solution, when the center frequency of the first frequency resource is the same as the center frequency of the second frequency resource, the network device may indicate a center frequency of either of the frequency resources, for example, configure two of a start frequency unit, an end frequency unit, or a bandwidth of either of the frequency resources, and the terminal device may determine a center frequency of the frequency resource based on two of the start frequency unit, the end frequency unit, or the bandwidth of the frequency resource; in addition, because the center frequencies of the two frequency resources are the same, the terminal device also learns of a center frequency of the other frequency resource. In this case, when configuring the other frequency resource, the network device may configure one of a start frequency unit, an end frequency unit, or a bandwidth, and may determine the other frequency resource based on the center frequency and one of the start frequency unit, the end frequency unit, or the bandwidth. Based on this configuration manner, configuration signaling overheads can be reduced.

With reference to the second aspect, in some implementations of the second aspect, the total bandwidth of the first frequency resource and the second frequency resource is less than or equal to the second threshold, and the first configuration information or the second configuration information further indicates the difference between the center frequency of the first frequency resource and the center frequency of the second frequency resource.

In this technical solution, the total bandwidth of the first frequency resource and the second frequency resource is less than or equal to the second threshold. The network device may indicate the center frequency of either of the frequency resources and the difference between the two center frequencies, for example, configure two of the start frequency unit, the end frequency unit, or the bandwidth of either of the frequency resources. The terminal device may determine the center frequency of the frequency resource based on two of the start frequency unit, the end frequency unit, or the bandwidth of the frequency resource. The terminal device also learns of the center frequency of the other frequency resource based on the difference between the two center frequencies. In this case, when configuring the other frequency resource, the network device may configure one of the start frequency unit, the end frequency unit, or the bandwidth, and may determine the other frequency resource based on the center frequency and one of the start frequency unit, the end frequency unit, or the bandwidth.

With reference to the first aspect, in some implementations of the first aspect, the total bandwidth of the first frequency resource and the second frequency resource is less than or equal to the second threshold, the first configuration information indicates two of a start frequency unit, an end frequency unit, or a bandwidth of the first frequency resource, and the second configuration information indicates two of a start frequency unit, an end frequency unit, or a bandwidth of the second frequency resource. It may be understood that the terminal device determines the first frequency resource based on two of the start frequency unit, the end frequency unit, or the bandwidth of the first frequency resource, and determines the second frequency resource based on two of the start frequency unit, the end frequency unit, or the bandwidth of the second frequency resource.

For example, the first configuration information and the second configuration information may be configured by using same configuration information, or may be separately configured by using two pieces of configuration information. This is not limited in embodiments of this application.

With reference to the second aspect, in some implementations of the second aspect, third configuration information is received; and the guard band of the wake-up signal and the guard band of the synchronization signal are determined based on the third configuration information.

In this technical solution, when the first bandwidth corresponding to the wake-up signal is the same as the second bandwidth corresponding to the synchronization signal, the third configuration information may be used to configure a guard band of one signal (one of the wake-up signal or the synchronization signal). Correspondingly, the terminal device may determine, based on the first bandwidth corresponding to the wake-up signal being the same as the second bandwidth corresponding to the synchronization signal, a guard band of the other signal (the other one of the wake-up signal or the synchronization signal). In this case, this configuration manner can reduce configuration overheads.

For a configuration manner of the third configuration information, refer to the first aspect. Details are not described again.

With reference to the second aspect, in some implementations of the second aspect, the wake-up signal is a low-power wake-up signal LP-WUS, and the synchronization signal is a low-power synchronization signal LP-SS.

According to a third aspect, a communication apparatus is provided. The apparatus may be a network device, or may be a chip or a circuit configured in a network device. This is not limited in this application.

The apparatus may include: a transceiver unit, configured to send a wake-up signal on a first frequency resource, where the wake-up signal is used to wake up at least one terminal device; and the transceiver unit is further configured to send a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

With reference to the third aspect, in some implementations of the third aspect, the total bandwidth is determined based on a smallest frequency resource index and a largest frequency resource index, the smallest frequency resource index is a smallest frequency resource index of the first frequency resource and the second frequency resource, and the largest frequency resource index is a largest frequency resource index of the first frequency resource and the second frequency resource.

With reference to the third aspect, in some implementations of the third aspect, a bandwidth indicated by the smallest frequency resource index and the largest frequency resource index is less than or equal to the second threshold.

With reference to the third aspect, in some implementations of the third aspect, the center frequency of the first frequency resource is the same as the center frequency of the second frequency resource, and the first threshold is 0.

With reference to the third aspect, in some implementations of the third aspect, a first bandwidth corresponding to the wake-up signal is the same as a second bandwidth corresponding to the synchronization signal, where the first bandwidth is a sum of a bandwidth occupied by the wake-up signal and a guard band of the wake-up signal, and the second bandwidth is a sum of a bandwidth occupied by the synchronization signal and a guard band of the synchronization signal.

With reference to the third aspect, in some implementations of the third aspect, the bandwidth occupied by the synchronization signal is less than the bandwidth occupied by the wake-up signal.

With reference to the third aspect, in some implementations of the third aspect, the transceiver unit is further configured to send first configuration information and second configuration information, where the first configuration information indicates the center frequency of the first frequency resource, and the second configuration information indicates one of a start frequency unit, an end frequency unit, or a bandwidth of the second frequency resource; or the first configuration information indicates the center frequency of the second frequency resource, and the second configuration information indicates one of a start frequency unit, an end frequency unit, or a bandwidth of the first frequency resource.

With reference to the third aspect, in some implementations of the third aspect, the total bandwidth of the first frequency resource and the second frequency resource is less than or equal to the second threshold, and the first configuration information or the second configuration information further indicates the difference between the center frequency of the first frequency resource and the center frequency of the second frequency resource.

With reference to the third aspect, in some implementations of the third aspect, the transceiver unit is further configured to send third configuration information, where the third configuration information indicates the guard band of the wake-up signal or the guard band of the synchronization signal.

With reference to the third aspect, in some implementations of the third aspect, the wake-up signal is a low-power wake-up signal LP-WUS, and the synchronization signal is a low-power synchronization signal LP-SS.

According to a fourth aspect, a communication apparatus is provided. The apparatus may be a terminal device, or may be a chip or a circuit configured in a terminal device. This is not limited in this application.

The apparatus may include: a transceiver unit, configured to receive a wake-up signal on a first frequency resource, where the wake-up signal is used to wake up at least one terminal device; and the transceiver unit is further configured to receive a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

With reference to the fourth aspect, in some implementations of the fourth aspect, the total bandwidth is determined based on a smallest frequency resource index and a largest frequency resource index, the smallest frequency resource index is a smallest frequency resource index of the first frequency resource and the second frequency resource, and the largest frequency resource index is a largest frequency resource index of the first frequency resource and the second frequency resource.

With reference to the fourth aspect, in some implementations of the fourth aspect, the total bandwidth of the first frequency resource and the second frequency resource is less than or equal to the second threshold, and a bandwidth indicated by the smallest frequency resource index and the largest frequency resource index is less than or equal to the second threshold.

With reference to the fourth aspect, in some implementations of the fourth aspect, the center frequency of the first frequency resource is the same as the center frequency of the second frequency resource, and the first threshold is 0.

With reference to the fourth aspect, in some implementations of the fourth aspect, a first bandwidth corresponding to the wake-up signal is the same as a second bandwidth corresponding to the synchronization signal, where the first bandwidth is a sum of a bandwidth occupied by the wake-up signal and a guard band of the wake-up signal, and the second bandwidth is a sum of a bandwidth occupied by the synchronization signal and a guard band of the synchronization signal.

With reference to the fourth aspect, in some implementations of the fourth aspect, the bandwidth occupied by the synchronization signal is less than the bandwidth occupied by the wake-up signal.

With reference to the fourth aspect, in some implementations of the fourth aspect, the apparatus includes a processing unit and a transceiver unit, and the transceiver unit is further configured to receive first configuration information and second configuration information, where the first configuration information indicates a center frequency of a frequency resource for sending the wake-up signal, and the second configuration information indicates one of a start frequency-domain unit, an end frequency unit, or a bandwidth of the frequency resource for sending the synchronization signal; or the first configuration information indicates a center frequency of a frequency resource for sending the synchronization signal, and the second configuration information indicates one of a start frequency-domain unit, an end frequency unit, or a bandwidth of a frequency resource for sending the wake-up signal. The processing unit is configured to determine the first frequency resource and the second frequency resource based on the first configuration information and the second configuration information.

With reference to the fourth aspect, in some implementations of the fourth aspect, the total bandwidth of the first frequency resource and the second frequency resource is less than or equal to the second threshold, and the first configuration information or the second configuration information further indicates the difference between the center frequency of the first frequency resource and the center frequency of the second frequency resource.

With reference to the fourth aspect, in some implementations of the fourth aspect, the transceiver unit is further configured to receive third configuration information; and the processing unit is further configured to determine the guard band of the wake-up signal and the guard band of the synchronization signal based on the third configuration information.

With reference to the fourth aspect, in some implementations of the fourth aspect, the wake-up signal is a low-power wake-up signal LP-WUS, and the synchronization signal is a low-power synchronization signal LP-SS.

According to a fifth aspect, a communication apparatus is provided. The apparatus is configured to perform the method according to any one of the first aspect to the fourth aspect. Specifically, the apparatus may include units and/or modules, for example, a processing unit and/or a communication unit, configured to perform the method according to any one of the implementations of any one of the first aspect to the fourth aspect.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a sixth aspect, a communication apparatus is provided. The apparatus includes at least one processor, configured to perform the method according to any one of the implementations of any one of the first aspect to the fourth aspect.

Optionally, the apparatus further includes a memory, configured to store a program. Correspondingly, the at least one processor is configured to execute the computer program or instructions stored in the memory.

In an implementation, the apparatus is a communication device (for example, a terminal device or a network device).

In another implementation, the apparatus is a chip, a chip system, or a circuit used in a communication device.

According to a seventh aspect, this application provides a processor, configured to perform the methods according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device, and the program code includes the method according to any one of the implementations of any one of the first aspect to the fourth aspect.

According to a ninth aspect, a computer program product including instructions is provided. When the computer program product runs on a computer, the computer is caused to perform the method according to any one of the implementations of any one of the first aspect to the fourth aspect.

According to a tenth aspect, a chip is provided. The chip includes a processor and a communication interface. The processor reads, through the communication interface, instructions stored in a memory, to perform the method according to any one of the implementations of any one of the first aspect to the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of any one of the first aspect to the sixth aspect.

### BRIEF DESCRIPTION OF DRAWINGS

FIG. 1 is a diagram of an architecture 100 of a communication system applicable to an embodiment of this application;
FIG. 2 is a diagram of a main circuit and a wake-up circuit applicable to an embodiment of this application;
FIG. 3 is a diagram of a waveform of a signal for which OOK modulation is used applicable to an embodiment of this application;
FIG. 4 is a diagram of a waveform of a signal that passes through a channel applicable to an embodiment of this application;
FIG. 5 is a diagram of a frequency domain position of an LP-WUS applicable to an embodiment of this application;
FIG. 6a and FIG. 6b are diagrams of frequency domain positions of LP-WUSs and LP-SSs applicable to an embodiment of this application;
FIG. 7 is a schematic flowchart of a communication method 700 applicable to an embodiment of this application;
FIG. 8a and FIG. 8b are diagrams of frequency domain positions of LP-WUSs and LP-SSs applicable to an embodiment of this application;
FIG. 9a and FIG. 9b are diagrams of other frequency domain positions of LP-WUSs and LP-SSs applicable to an embodiment of this application;
FIG. 10 is a diagram of a communication apparatus applicable to an embodiment of this application; and
FIG. 11 is a block diagram of a structure of a communication architecture applicable to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or an internet of things (internet of things, IoT) communication system. The technical solutions provided in this application may be further applied to a non-terrestrial network (non-terrestrial network, NTN) system, for example, inter-satellite communication and satellite communication.

For example, a satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in the communication system may send a signal to another device or receive a signal from another device. The signal may include information, signaling, data, or the like. The device may alternatively be replaced with an entity, a network entity, a communication device, a communication apparatus, a communication module, a node, a communication node, or the like. In the present disclosure, a device is used as an example for description.

The terminal device in embodiments of this application includes various devices having a wireless communication function, and may be configured to be connected to a person, an object, a machine, and the like. The terminal device may be widely used in various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-helicopter, a four-helicopter, or an airplane), a ship, a remote control device, a smart home device, an industrial device, an apparatus disposed in the foregoing device (for example, a communication module, a modem, or a chip in the foregoing device), or another processing device connected to a wireless modem. For ease of description, an example in which the terminal device is a terminal or a UE is used below for description.

It should be understood that, in some scenarios, the UE may be further configured to serve as a base station. For example, the UE may serve as a scheduling entity that provides a sidelink signal between UEs in a scenario like V2X, D2D, or P2P.

In embodiments of this application, an apparatus configured to implement a function of the terminal device, namely, a terminal apparatus, may be a terminal device, or may be an apparatus that can support the terminal device in implementing the function, for example, a chip system or a chip. The apparatus may be installed in the terminal device. In embodiments of this application, the chip system may include a chip, or may include a chip and another discrete device.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point, a primary station, a secondary station, a multi-standard radio (multi-standard radio, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU or including a CU and a DU, or a device including a CU control plane (a central unit-control plane (central unit-control plane, CU-CP)) node, a CU user plane (a central unit-user plane (central unit-user plane, CU-UP)) node, and a DU node.

In some deployments, a plurality of RAN nodes coordinate to assist a terminal in implementing radio access, and different RAN nodes separately implement a part of functions of the base station. For example, the RAN node may be a CU, a DU, a CU-CP, a CU-UP, or a radio unit (radio unit, RU). The CU and the DU may be separately disposed, or may be included in a same network element, for example, in a BBU. The RU may be included in a radio frequency device or a radio unit, for example, included in an RRU, an AAU, or an RRH.

In different systems, the CU (or the CU-CP and the CU-UP), the DU, or the RU may also have different names, but a person skilled in the art may understand meanings thereof. For example, the radio access network may also be an open radio access network (open radio access network, O-RAN) architecture. In an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented via a software module, a hardware module, or a combination of a software module and a hardware module.

In embodiments of this application, an apparatus configured to implement a function of the network device may be a network device, or may be an apparatus that can support the network device in implementing the function, for example, a chip system or a chip. The apparatus may be installed in the network device. In embodiments of this application, the chip system may include a chip, or may include a chip and another discrete device.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

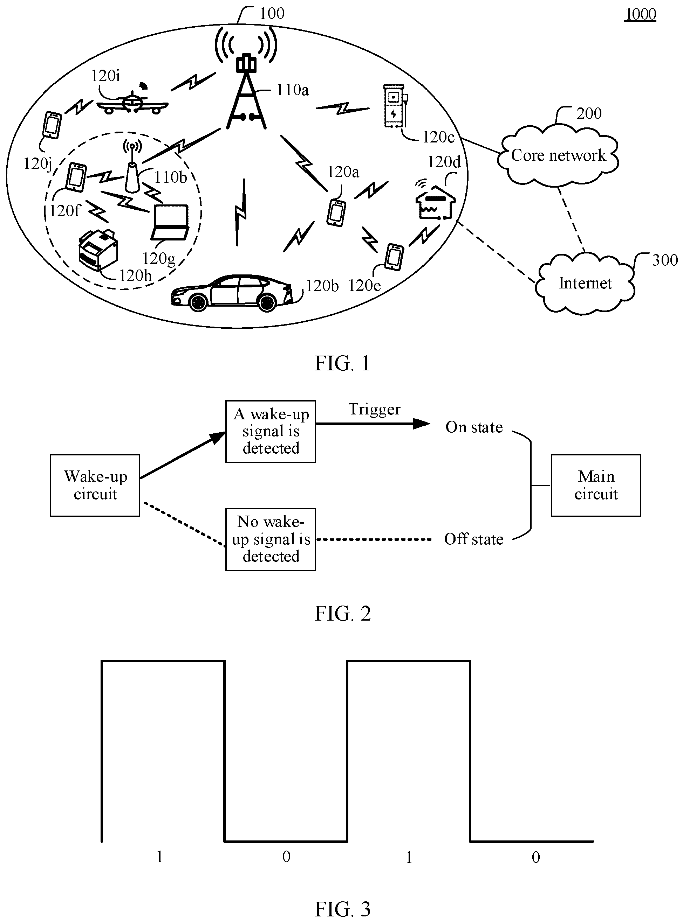

First, a communication system applicable to embodiments of this application is briefly described with reference to FIG. 1. The following is an example.

FIG. 1 is a diagram of a communication system 100 applicable to an embodiment of this application. As shown in FIG. 1, the wireless communication system 100 may include at least one network device, for example, a network device 110a and a network device 110b (collectively referred to as a network device 110) shown in FIG. 1. The wireless communication system 100 may further include at least one terminal device, for example, a terminal device 120a to a terminal device 120j (collectively referred to as a terminal device 120) shown in FIG. 1. A plurality of antennas may be configured for each of the network device and the terminal device, and the network device and the terminal device may communicate with each other by using a multi-antenna technology. Terminal devices may also communicate with each other. For example, the terminal devices may directly communicate with each other. For another example, the terminal devices may communicate with each other via another communication device, for example, a network device or another terminal device.

When the network device communicates with the terminal device, the network device may manage one or more cells, and one cell may have an integer quantity of terminal devices. Optionally, the network device 110 and the terminal device 120 form a communication system with a single cell. Without loss of generality, the cell is referred to as a cell #1. The network device 110 may be a network device in the cell #1, or the network device 110 may serve a terminal device (for example, the terminal device 120) in the cell #1.

In a cell, for example, the cell #1, the network device 110 may send a paging message to the terminal device 120.

A terminal device in a cell may receive a paging message regardless of whether the terminal device is in an idle state or an inactive state.

It should be noted that a cell may be understood as an area within coverage of a radio signal of a network device.

It should be understood that FIG. 1 is a simplified diagram of an example for ease of understanding. The wireless communication system 100 may further include other network devices such as a core network 200 and an Internet 300, or may further include another terminal device, which is not shown in FIG. 1. Embodiments of this application are applicable to any communication scenario in which a transmit end device communicates with a receive end device.

For ease of understanding embodiments of this application, the following first briefly describes terms in embodiments of this application.
1. Wake-up circuit: The wake-up circuit is also referred to as a wake-up receiver/radio (wake-up receiver/radio, WUR), a low-power wake-up receiver (low-power wake-up receiver, LP-WUR), or a wake-up module, and may be understood as a separate low-power small circuit, for example, a circuit used by a terminal device in an idle state or an inactive state. The low-power small circuit may be implemented by using a separate small circuit or chip with a simple structure, and has low power consumption. It may be understood that the wake-up circuit is merely named for differentiation, and a specific name of the wake-up circuit does not limit the protection scope of this application. For example, without loss of generality, the wake-up circuit may also be described as a first circuit (or a first module). The following uses the wake-up circuit for a uniform description.

Receiving a signal by the terminal device by using the wake-up circuit may be referred to as being transmitted on a wake-up link. The wake-up link represents a connection relationship between the terminal device and a network device, and is a logical concept rather than a physical entity. It may be understood that the wake-up link is merely named for differentiation, and a specific name of the wake-up link does not limit the protection scope of this application. For example, without loss of generality, the wake-up link may also be described as a first link. The following uses the wake-up link for a uniform description.

The signal received by the terminal device by using the wake-up circuit may be referred to as a wake-up signal (wake-up signal, WUS) or a low-power wake-up signal (low-power wake-up signal, LP-WUS). It may be understood that the wake-up signal is merely named for differentiation, and a specific name of the wake-up signal does not limit the protection scope of this application. For example, without loss of generality, the wake-up signal may also be referred to as a first signal. The following uses the wake-up signal for a uniform description.

The wake-up signal may be used to wake up at least one terminal device. Waking up the terminal device indicates waking up a main circuit of the terminal device. For example, the wake-up signal indicates paging-related information, and the paging-related information may include, for example, whether one terminal device or one group of terminal devices are paged. The wake-up signal may also be referred to as a low-power wake-up signal (low power wake-up signal, LP-WUS), and a specific name of the wake-up signal does not limit the protection scope of this application.

The terminal device may further receive a synchronization signal by using the wake-up circuit.

The synchronization signal may be used to implement a synchronization function, and may be further used to implement some measurement functions performed by using the wake-up circuit, for example, radio resource management (radio resource management, RRM) measurement (RRM measurement). The synchronization signal may also be referred to as a low-power synchronization signal (low-power synchronization signal, LP-SS).

2. Main circuit: The main circuit is also referred to as a main receiver (main receiver, MR) or a main module, and may be understood as a circuit used when a terminal device normally performs data transmission, or a circuit used when a terminal device performs data transmission in a connected state. When the terminal device performs data transmission by using the main circuit, power consumption is high. It may be understood that the main circuit is merely named for differentiation, and a specific name of the main circuit does not limit the protection scope of this application. For example, without loss of generality, the main circuit may also be described as a second circuit (or a second module). The following uses the main circuit for a uniform description.

A signal received by the terminal device by using the main circuit may be referred to as transmission on a main link. The main link represents a connection relationship between the terminal device and a network device, and is a logical concept rather than a physical entity. It may be understood that the main link is merely named for differentiation, and a specific name of the main link does not limit the protection scope of this application. For example, without loss of generality, the main link may also be described as a second link. The following uses the main link for a uniform description.

For example, FIG. 2 is a diagram of a main circuit and a wake-up circuit.

As shown in FIG. 2, a terminal device may receive (or referred to as detect) a wake-up signal through the wake-up circuit, and the terminal device may receive a data signal through the main circuit. It is assumed that the terminal device receives the wake-up signal through the wake-up circuit. If the terminal device detects no wake-up signal, the terminal device continues using the wake-up circuit to receive the wake-up signal, and the main circuit may be in an off state (or a sleep state). If the terminal device detects the wake-up signal, the terminal device triggers wake up of the main circuit, that is, causes the main circuit to be in/be switched to an on state (or referred to as an operating state or an active state). After the main circuit is turned on, the terminal device may perform transmission of the data signal through the main circuit.

3. On-off keying (on-off keying, OOK) modulation: is used for modulating information depending on whether a signal is sent, and a corresponding wake-up circuit may receive the signal by using an envelope detection method. By using an OOK modulation technology, demodulation can be implemented by a receiver with extremely low complexity, so that an objective of low power consumption of the wake-up circuit can be achieved. To ensure a power consumption gain, the OOK modulation may be used for a wake-up signal. It may be understood that another modulation manner may alternatively be used for the wake-up signal. This is not limited herein.

When the OOK modulation is used for the signal, each bit (that is, an encoded bit) may correspond to one symbol (symbol). Equivalently, a symbol may also be referred to as a chip (chip), or may be referred to as another name. This is not limited herein.

For example, when the bit (bit) is "1", a signal is sent in a length of the symbol (that is, a signal transmit power in the length of the symbol is not 0, or a signal transmit power in the length of the symbol is greater than a threshold); or when the bit is "0", no signal is sent in a length of the symbol (that is, a signal transmit power in the length of the symbol is 0, or a signal transmit power in the length of the symbol is less than a threshold). Alternatively, it may be understood as that, in OOK modulation, if energy is sent, it indicates that the bit is "1"; or if no energy is sent, it indicates that the bit is "0".

For another example, when the bit is "0", a signal is sent in a length of the symbol (that is, a signal transmit power in the length of the symbol is not 0, or a signal transmit power in the length of the symbol is greater than a threshold); or when the bit is "1", no signal is sent in a length of the symbol (that is, a signal transmit power in the length of the symbol is 0, or a signal transmit power in the length of the symbol is less than a threshold). Alternatively, it may be understood as that, in OOK modulation, if energy is sent, it indicates that the bit is "0"; or if no energy is sent, it indicates that the bit is "1".

For ease of description, the following mainly uses an example in which when the bit is "1", a signal is sent in a length of the symbol, or when the bit is "0", no signal is sent in a length of the symbol for description.

In addition, for ease of description, if a signal is sent in a symbol, the symbol is denoted as an ON symbol (symbol); or if no signal is sent in a symbol, the symbol is denoted as an OFF symbol. For example, when the bit is "1", a signal is sent in a length of the symbol, or when the bit is "0", no signal is sent in a length of the symbol. An ON symbol indicates that an information bit is "1", and an OFF symbol indicates that an information bit is "0". The ON symbol may also be referred to as an ON signal, and the OFF symbol may also be referred to as an OFF signal. For uniformity, the ON symbol and the OFF symbol are used for description in the following.

In addition, an OOK symbol mentioned below indicates a symbol obtained through OOK modulation. The OOK symbol may be, for example, an ON symbol, or may be an OFF symbol. For example, if the information bit is "1", the OOK symbol obtained through OOK modulation is an ON symbol; or if the information bit is "0", the OOK symbol obtained through OOK modulation is an OFF symbol. The OOK symbol may also be referred to as an OOK signal. For uniformity, the OOK symbol is used for description in the following.

For example, FIG. 3 is a diagram of a waveform of a signal for which OOK modulation is used.

For example, it is assumed that, when a bit is "1", a signal is sent in a length of an OOK symbol; or when a bit is "0", no signal is sent in a length of an OOK symbol. Therefore, the waveform shown in FIG. 3 may represent four bits "1010". To be specific, a 1^{st} bit and a 3^{rd} bit are ON symbols, and a 2^{nd} bit and a 4^{th} bit are OFF symbols. As shown in FIG. 3, a communication system generally uses a specific frequency (frequency) for sending, and a sent signal needs to be modulated on a carrier. At a receive end, the receive end detects an envelope (or energy) of a received signal, and determines whether an OOK symbol corresponds to a bit "0" or a bit "1", to complete demodulation.

When OOK modulation is used for the signal, a receiver has a simple structure and low power consumption, and an objective of energy saving of a wake-up circuit can be achieved. However, a transmission rate is low. Specifically, when OOK modulation is used for the signal, each symbol can only transmit one bit. In addition, in consideration of a problem of a multipath delay in the wireless communication system, a time length of each symbol needs to be long enough to reduce inter-symbol interference caused by the multipath delay. Therefore, if OOK modulation is used for the signal, each symbol carries information about one bit, and the time length of each symbol is long. Consequently, the transmission rate is very low.

4. OFDM receiver: To further improve demodulation performance, a more advanced receiver, for example, an OFDM receiver having two paths of I/Q, may be considered. A signal received by the OFDM receiver first passes through a matching network and a radio frequency (radio frequency, RF) filter, to filter out out-of-band noise/interference. Then, a spectrum is shifted to a baseband (baseband, BB) through a frequency mixer. When the spectrum is shifted to the baseband, two branches (I and Q) (corresponding frequency-mixed signals have a phase difference of pi/2) are distinguished from each other, and a signal on each branch passes through a baseband filter, to further filter out out-of-band noise/interference. Then, signals of the two branches are combined together. In this case, a value of a baseband signal is mathematically represented as a complex number with both an amplitude and a phase. Then, the baseband signal is further processed.

When the OFDM receiver is used to receive an OOK signal, because the OFDM receiver has a capability of detecting a signal phase, the OFDM receiver may further detect sequence information inside an ON symbol of the OOK. For example, if the OFDM receiver can know in advance (where for example, it is predefined in a protocol, or a network device pre-configures a related parameter for a terminal device) specific information of a sequence for generating an ON symbol, the OFDM receiver may locally generate a same sequence. When receiving an OOK signal, the OFDM receiver performs correlation between the received signal and the local sequence, to reduce impact of (in-band) noise and/or interference that are/is not filtered out by the filters. Therefore, demodulation performance is improved.

Alternatively, if there may be a plurality of sequences for generating an ON symbol, the OFDM receiver may even identify, through detection, which sequence is sent, to obtain more information. For example, it is assumed that there may be four sequences for generating the ON symbol, and the sequences respectively correspond to information {00, 01, 10, 11}. The OFDM receiver may obtain additional 2-bit information by detecting which sequence is used. In this way, a data rate carried by the LP-WUS can be increased.

The foregoing method for "causing the OFDM receiver to know information about a sequence used to generate an OOK signal, to improve demodulation performance and/or improve a data rate" may be referred to as a sequence on top of OOK or an overlaid sequence over OOK.

5. Low-power synchronization signal (low-power synchronization signal, LP-SS): can be used for implementing a synchronization function, and can be further used for implementing an RRM measurement function.

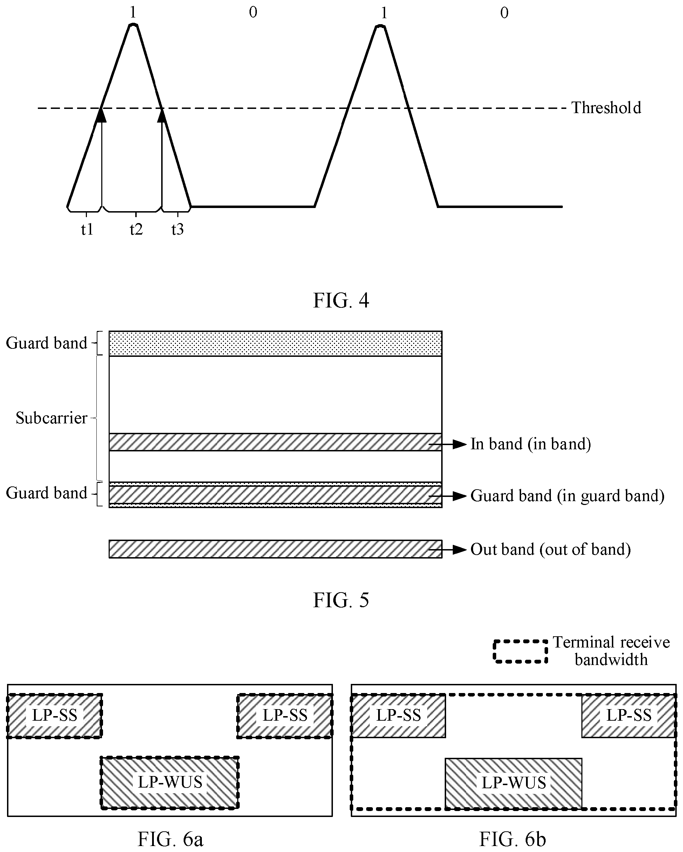

After a signal passes through a channel, distortion may occur due to impact of a channel state and the like. The waveform of OOK modulation shown in FIG. 3 is used as an example. The waveform shown in FIG. 3 may become a waveform shown in FIG. 4 at a receive end.

For example, FIG. 4 is a diagram of a waveform of a signal that passes through a channel. To determine whether the signal corresponds to a bit "0" or a bit "1", a terminal device may compare a level value of the received signal with a threshold (the threshold is shown by a dashed line in FIG. 4). For example, if the level value of the signal received by the terminal device is greater than the threshold, it indicates that the signal corresponds to the bit "1"; or if the level value of the signal received by the terminal device is less than the threshold, it indicates that the signal corresponds to the bit "0". As shown in FIG. 4, if the terminal device compares a level value of the signal received within a range t2 with the threshold, determining is accurate; or if the terminal device compares a level value of the signal received within a range t1 or t3 with the threshold, determining is inaccurate, in other words, 1 is incorrectly determined as 0.

Therefore, when a terminal device receives a wake-up signal by using a wake-up circuit, to correctly receive the wake-up signal, time synchronization of a wake-up link needs to be obtained. That is, the terminal device may obtain a boundary location of a symbol, and determine, based on the boundary location, whether the signal corresponds to a time location of 0 or 1. For example, the terminal device may determine, by using a level value at a middle location of a symbol, whether the signal corresponds to 0 or 1. In addition, because precision of a local clock of the terminal device is limited, time drift may occur. If the wake-up link does not provide a synchronization function, after the terminal device operates on the wake-up link for a period of time, a problem of time asynchronization between the terminal device and a network device (that is, symbol boundary locations considered by the terminal device and the network device are inconsistent) may occur. Consequently, signal receiving is affected.

To support the synchronization function, an LP-SS may be introduced. Specifically, the terminal device may complete the synchronization function based on the LP-SS. For example, the LP-SS is periodically sent.

For example, a modulation scheme of the LP-SS is OOK. That the modulation scheme of the LP-SS is the OOK may be alternatively described as follows: In a time interval corresponding to the LP-SS, there is energy at some time domain positions, and there is no energy at some time domain positions.

In addition, patterns (pattern) (or referred to as a mode or pattern) of ON symbols/OFF symbols of the LP-SS may follow a specific order to enhance detection performance of the LP-SS. For example, the LP-SS may be generated based on a binary sequence (binary sequence) having a good autocorrelation characteristic.

In addition, the LP-SS may also use a sequence on top of OOK technology or an overlaid sequence over OOK technology, so that the OFDM receiver can also use the LP-SS.

### 6. First frequency resource and second frequency resource

The following uses a terminal device as an example to describe the first frequency resource and the second frequency resource.

In a first possible case, the terminal device includes a first module and a second module. For example, power consumption of the first module may be less than power consumption of the second module. The first module may be, for example, the wake-up circuit in FIG. 2, or may be a receiving module of the wake-up circuit. The second module may be, for example, the main circuit in FIG. 2, or may be a receiving module of the main circuit. In this application, the first module may be replaced with the wake-up circuit (or a first circuit), and the second module may be replaced with the main circuit (or a second circuit). The following uses the first module and the second module for a uniform description.

In this case, the first frequency resource may indicate a frequency resource used by the terminal device to transmit an LP-WUS via the first module, and the second frequency resource may indicate a frequency resource used by the terminal device to transmit an LP-SS via the first module.

It may be understood that the foregoing mainly uses the terminal device as an example to describe the first frequency resource and the second frequency resource. It may be understood that the foregoing description is also applicable to another communication device (for example, a network device). For brevity, details are not described herein again.

### 7. Signal bandwidth and frequency domain position of an LP-WUS

The signal bandwidth of the LP-WUS may not exceed 5 MHz or 20 MHz.

For example, FIG. 5 is a diagram of a frequency domain position of an LP-WUS. As shown in FIG. 5, the frequency domain position of the LP-WUS may be in band (in band), out of band (out band), or in guard band (guard band). In band means that a frequency domain position of an LP-WUS/LP-SS in a cell (cell) and a frequency domain position of another signal in the cell are on a same carrier (carrier). Out band means that a frequency domain position of another signal (that is, a signal other than an LP-WUS/LP-SS) in a cell is on a carrier, but a frequency domain position of the LP-WUS/LP-SS in the cell is outside the carrier. "Guard band" means that a frequency domain position of another signal (that is, a signal other than an LP-WUS/LP-SS) in a cell is on a carrier, but a frequency domain position of the LP-WUS/LP-SS in the cell is in a guard band of the carrier.

A pattern of the frequency domain position of the LP-WUS shown in FIG. 5 is merely an example, and does not limit the protection scope of embodiments of this application.

A location relationship between the LP-WUS and the LP-SS in frequency domain is not limited.

For example, FIG. 6a and FIG. 6b are diagrams of frequency domain positions of LP-WUSs and LP-SSs. The frequency domain positions of the LP-WUSs and the LP-SSs shown in FIG. 6a and in FIG. 6b are not limited. As shown in FIG. 6a, a receive bandwidth of a terminal device may perform reception in a frequency hopping manner based on the frequency domain positions of the LP-WUS and the LP-SS. This receiving manner may increase implementation difficulty and power consumption of the terminal device. As shown in FIG. 6b, the terminal device may increase a receive bandwidth based on the frequency domain positions of the LP-WUS and the LP-SS, so that a total receive bandwidth of the terminal device can cover the frequency domain positions of the LP-WUS and the LP-SS. This receiving manner may increase power consumption of the terminal device. In addition, to avoid interference caused to reception of the LP-WUS/LP-SS by the terminal device, a network device cannot send another signal at a white location in a dashed box in the figure. Consequently, resource overheads are increased.

Patterns of the frequency domain positions of the LP-WUSs and the LP-SSs shown in FIG. 6a and FIG. 6b are merely examples, and do not limit the protection scope of embodiments of this application.

In view of this, an embodiment of this application provides a communication method. A location relationship between an LP-WUS and an LP-SS in frequency domain is defined, to reduce implementation complexity of a terminal device and avoid a waste of resources.

It should be noted that in this application, "indication" may include a direct indication and an indirect indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information may be indicated in a plurality of manners. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periodicities and/or sending occasions of these pieces of sub-information may be the same or may be different.

In addition, in this application, the expression "/" indicates that the associated objects are in an "or" relationship. For example, A/B may represent A or B. The expression "and/or" indicates an "and" association relationship or an "or" association relationship between associated objects. For example, A and/or B may indicate the following cases: Only A exists, only B exists, and both A and B exist, where A and B may be singular or plural. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist. A, B, and C may be singular or plural.

The following describes in detail the method provided in embodiments of this application with reference to the accompanying drawings. Embodiments provided in this application may be applied to a scenario shown in the foregoing figure. This is not limited.

The following describes in detail the solution of this application.

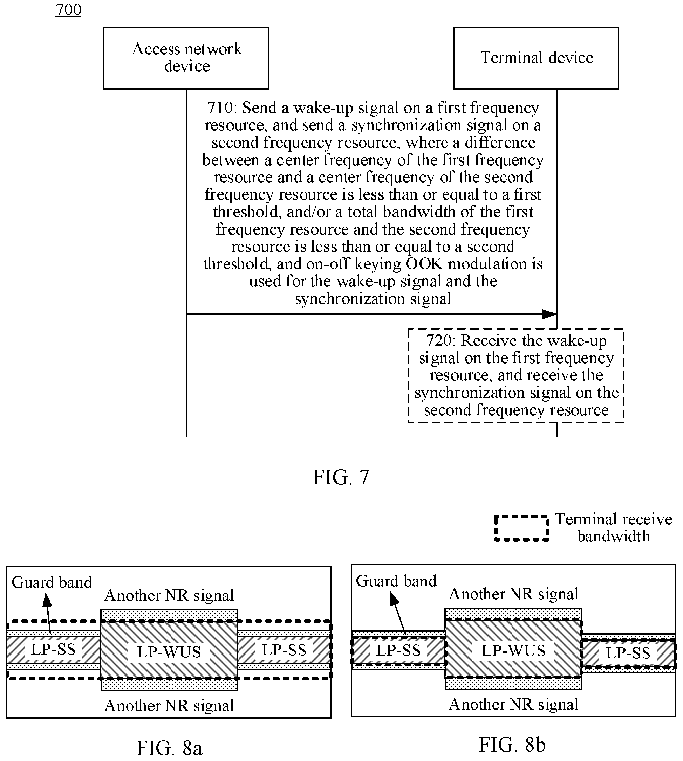

For example, FIG. 7 is a diagram of a communication method 700 according to an embodiment of this application. For ease of description, the following uses an example in which the method 700 is performed by interaction between a network device (for example, an access network device) and a terminal device for description. It may be understood that the method 1100 may alternatively be performed by a component of the network device or the terminal device, for example, a chip, a chip system, or a circuit. This is not limited herein. The steps described below as being performed by a single execution body may alternatively be performed by a plurality of execution bodies. These execution bodies may be logically and/or physically separated. The method 700 shown in FIG. 7 may include the following steps.

The method 700 includes step 710. Optionally, the method 700 includes step 720.

S710: Send a wake-up signal on a first frequency resource, and send a synchronization signal on a second frequency resource.

In step 710, the access network device sends the wake-up signal by using the first frequency resource, and sends the synchronization signal by using the second frequency resource.

In step S710, an order in which the access network device sends the wake-up signal and the synchronization signal is not limited.

For example, the wake-up signal is used to wake up at least one terminal device. For the wake-up signal, refer to the foregoing related descriptions.

For example, the synchronization signal is used to implement a synchronization function. For the synchronization function, refer to the foregoing related descriptions.

OOK modulation is performed for the wake-up signal and the synchronization signal, which may alternatively be described as follows: In a time interval corresponding to the wake-up signal/synchronization signal, there is energy at some time domain positions, and there is no energy at some time domain positions; or energy at some time domain positions is higher than a first threshold, and energy at some time domain positions is lower than a second threshold, where the first threshold is greater than or equal to the second threshold; or the wake-up signal/synchronization signal includes X OOK symbols, the X OOK symbols include X1 first symbols and X2 second symbols, a signal amplitude of the first symbol is greater than or equal to a threshold #1, and a signal amplitude of the second symbol is less than or equal to a threshold #2, where X is an integer greater than 0, X1 and X2 are integers greater than or equal to 0, and X1+X2=X. That the signal amplitude of the first symbol is greater than or equal to the threshold #1, and the signal amplitude of the second symbol is less than or equal to the threshold #2 may be replaced with any one of the following: The signal amplitude of the first symbol is greater than the signal amplitude of the second symbol; the signal amplitude of the first symbol is greater than the signal amplitude of the second symbol in a preset time period; a signal power of the first symbol is greater than a signal power of the second symbol; a signal power of the first symbol is greater than a signal power of the second symbol in a preset time period; a signal power of the first symbol is greater than or equal to the threshold #1, and a signal power of the second symbol is less than or equal to the threshold #2; in a preset time period, a signal power of the first symbol is greater than or equal to the threshold #1, and a signal power of the second symbol is less than or equal to the threshold #2; a signal level value of the first symbol is greater than a signal level value of the second symbol; in a preset time period, a signal level value of the first symbol is greater than a signal level value of the second symbol; a signal level value of the first symbol is greater than or equal to the threshold #1, and a signal level value of the second symbol is less than or equal to the threshold #2; in a preset time period, a signal level value of the first symbol is greater than or equal to the threshold #1, and a signal level value of the second symbol is less than or equal to the threshold #2; or the first symbol indicates (or corresponds to, or represents) the threshold #1, and the second symbol indicates (or corresponds to, or represents) a second bit value. The first bit value is different from the second bit value. For example, the first bit value is "1", and the second bit value is "0". For another example, the first bit value is "0", and the second bit value is "1".

Frequency domain positions of the first frequency resource and the second frequency resource may meet a specific condition.

In a possible implementation, a difference between a center frequency of the first frequency resource and a center frequency of the second frequency resource is less than or equal to the first threshold.

The first threshold may be predefined, preconfigured, pre-agreed, or pre-stored.

The center frequency of the first frequency resource may indicate the frequency domain position of the first frequency resource, the center frequency of the second frequency resource may indicate the frequency domain position of the second frequency resource, and the difference between the center frequency of the first frequency resource and the center frequency of the second frequency resource may indicate a relationship between the frequency domain positions of the first frequency resource and the second frequency resource.

For example, when the difference between the center frequency of the first frequency resource and the center frequency of the second frequency resource is less than the first threshold, the frequency domain position of the first frequency resource and the frequency domain position of the second frequency resource are restricted within a specific range by using the difference between the center frequency of the first frequency resource and the center frequency of the second frequency resource.

For example, when the center frequency of the first frequency resource is the same as the center frequency of the second frequency resource, the first threshold is 0. In other words, the first threshold is 0, and the center frequency of the first frequency resource is aligned with the center frequency of the second frequency resource.

For example, the wake-up signal may be an LP-WUS, and the synchronization signal may be an LP-SS.

For example, FIG. 8a and FIG. 8b are diagrams of frequency domain positions of LP-WUSs and LP-SSs applicable to an embodiment of this application.

In each of FIG. 8a and FIG. 8b, a center frequency of a first frequency resource of the LP-WUS is the same as a center frequency of a second frequency resource of the LP-SS.

For example, a bandwidth occupied by the wake-up signal may be the same as or different from a bandwidth occupied by the synchronization signal. This is not limited in embodiments of this application.

For example, a first bandwidth corresponding to the wake-up signal is the same as a second bandwidth corresponding to the synchronization signal. The first bandwidth is a sum of the bandwidth occupied by the wake-up signal and a guard band of the wake-up signal, and the second bandwidth is a sum of the bandwidth occupied by the synchronization signal and a guard band of the synchronization signal.

For example, a sum of a bandwidth occupied by the LP-WUS and a guard band of the LP-WUS is equal to a sum of a bandwidth occupied by the LP-SS and a guard band of the LP-SS. In other words, sums of bandwidths occupied by the two types of signals and guard bands of the two types of signals are equal.

It may be understood that, in this case, a resource that is easy to be scheduled can be reserved for another signal (for example, a signal other than the LP-WUS and the LP-SS). This helps reduce scheduling complexity of an access network device.

For example, when the sums of the bandwidths occupied by the two types of signals and the guard bands of the two types of signals are equal, the bandwidth of the synchronization signal may be less than the bandwidth of the wake-up signal, that is, the bandwidth occupied by the synchronization signal may be less than the bandwidth occupied by the wake-up signal.

It may be understood that when the bandwidth occupied by the synchronization signal is smaller, correspondingly, the guard band of the synchronization signal is larger, so that the terminal device can resist greater frequency offset interference before performing frequency synchronization by using the synchronization signal. In other words, when the guard band of the synchronization signal is larger, even if a large frequency offset exists, the terminal device can receive a complete synchronization signal, and does not receive interference (an interference signal is outside the guard band). This can avoid excessive impact on receiving performance (for example, synchronization performance, demodulation performance, and measurement performance).

For example, in FIG. 8a, the terminal device may receive the LP-SS and the LP-WUS by using resources in a dashed box. Even if a large frequency offset exists, as long as a value of the frequency offset is less than or equal to a value of a (single-side) guard band, most of the bandwidth occupied by the LP-SS is still located in a receive resource, and interference outside the guard band is not allowed to enter. Therefore, impact on synchronization and measurement performed by using the LP-SS is small.

The following describes in detail frequency resource configuration of the wake-up signal and the synchronization signal.

In a possible implementation, the access network device sends first configuration information and second configuration information.

For example, the first configuration information indicates the center frequency of the first frequency resource, and the second configuration information indicates one of a start frequency unit, an end frequency unit, or a bandwidth of the second frequency resource; or the first configuration information indicates the center frequency of the second frequency resource, and the second configuration information indicates one of a start frequency unit, an end frequency unit, or a bandwidth of the first frequency resource.

For example, the start frequency unit or the end frequency unit may be a resource block (resource block, RB) or a resource element (resource element, RE). This is not limited in embodiments of this application.

That the first configuration information indicates the center frequency of the first frequency resource may include two implementations: direct indication and indirect indication.

In a possible implementation, the first configuration information includes first indication information, and the first indication information indicates the center frequency of the first frequency resource.

In another possible implementation, the first configuration information includes at least two of the start frequency unit, the end frequency unit, or the bandwidth of the first frequency resource.

Similarly, that the first configuration information indicates the center frequency of the second frequency resource may include two implementations: direct indication and indirect indication.

In a possible implementation, the first configuration information includes second indication information, and the second indication information indicates the center frequency of the second frequency resource.

In another possible implementation, the first configuration information includes at least two of the start frequency unit, the end frequency unit, or the bandwidth of the second frequency resource.

It may be understood that when the center frequency of the first frequency resource is the same as the center frequency of the second frequency resource, the access network device may configure two of a start frequency unit, an end frequency unit, or a bandwidth of one frequency resource, and the terminal device determines a center frequency of the frequency resource based on two of the start frequency unit, the end frequency unit, or the bandwidth of the frequency resource; in addition, because the center frequencies of the two frequency resources are the same, the terminal device also learns of a center frequency of the other frequency resource. In this case, when configuring the other frequency resource, the access network device may configure one of a start frequency unit, an end frequency unit, or a bandwidth, and may determine the other frequency resource based on the center frequency and one of the start frequency unit, the end frequency unit, or the bandwidth.

Based on the foregoing configuration manner, configuration signaling overheads can be reduced.

In another example, the first configuration information indicates two of a start frequency unit, an end frequency unit, or a bandwidth of the first frequency resource, and the second configuration information indicates two of a start frequency unit, an end frequency unit, or a bandwidth of the second frequency resource.

It may be understood that the terminal device determines the first frequency resource based on two of the start frequency unit, the end frequency unit, or the bandwidth of the first frequency resource, and determines the second frequency resource based on two of the start frequency unit, the end frequency unit, or the bandwidth of the second frequency resource.

It may be understood that the first configuration information and the second configuration information may be configured by using same configuration information, or may be separately configured by using two pieces of configuration information. This is not limited in embodiments of this application.

In a possible implementation, the access network device sends third configuration information.

The third configuration information indicates the guard band of the wake-up signal and/or the guard band of the synchronization signal.

For example, when the first bandwidth corresponding to the wake-up signal is the same as the second bandwidth corresponding to the synchronization signal, the third configuration information may be used to configure a guard band of one signal (one of the wake-up signal or the synchronization signal). Correspondingly, the terminal device may determine, based on the first bandwidth corresponding to the wake-up signal being the same as the second bandwidth corresponding to the synchronization signal, a guard band of the other signal (the other one of the wake-up signal or the synchronization signal). In this case, this configuration manner can reduce configuration overheads.

For example, content of the third configuration information may be carried in the first configuration information and/or the second configuration information.

For example, the first configuration information includes the guard band of the wake-up signal, and the second configuration information includes the guard band of the synchronization signal.

For example, the third configuration information may alternatively be separately configured.

For example, the third configuration information may alternatively be configured together with the first configuration information and the second configuration information by using a same piece of configuration information.

The foregoing configuration manners are merely examples for description, and do not constitute a limitation on the protection scope of embodiments of this application.

In another possible implementation, a total bandwidth of the first frequency resource and the second frequency resource is less than or equal to the second threshold.

The second threshold may be predefined, preconfigured, pre-agreed, or pre-stored.

The total bandwidth is determined based on a smallest frequency resource index and a largest frequency resource index. The smallest frequency resource index is a smallest frequency resource index of the first frequency resource and the second frequency resource, and the largest frequency resource index is a largest frequency resource index of the first frequency resource and the second frequency resource.

For example, the total bandwidth is determined based on a bandwidth indicated by the smallest frequency resource index and the largest frequency resource index. In other words, the bandwidth indicated by the smallest frequency resource index and the largest frequency resource index is less than or equal to the second threshold.

The smallest frequency resource index may be used as a start frequency resource index, and an end frequency resource index may be used as the largest frequency resource index. The bandwidth indicated by the smallest frequency resource index and the largest frequency resource index may be understood as a bandwidth indicated by the start frequency resource index and the end frequency resource index.

For example, the second threshold may indicate a quantity of RBs, or may indicate a quantity of REs. In other words, the total bandwidth may be a quantity of RBs, or may be a quantity of REs. This is not limited in embodiments of this application.

For example, if a frequency resource index range of the first frequency resource is from RB #2 to RB #5, and a frequency resource index range of the second frequency resource is from RB #3 to RB #8, the largest frequency resource index (used as the end frequency resource index) is #8, the smallest frequency resource index (used as the start frequency resource index) is #2, and the bandwidth indicated by the smallest frequency resource index and the largest frequency resource index is a bandwidth with a frequency resource index range from RB #2 to RB #8, that is, the total bandwidth is seven RBs.

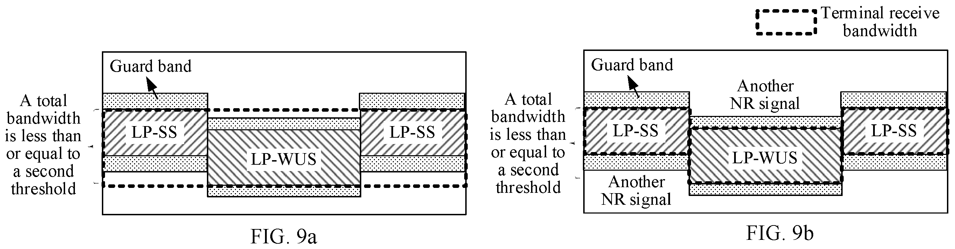

For example, FIG. 9a and FIG. 9b are diagrams of other frequency domain positions of LP-WUSs and LP-SSs applicable to an embodiment of this application.

In each of FIG. 9a and FIG. 9b, a total bandwidth of a first frequency resource of an LP-WUS and a second frequency resource of an LP-SS is less than a second threshold.

In this solution, the total bandwidth of the first frequency resource and the second frequency resource is limited, so that relative locations of the first frequency resource and the second frequency resource in frequency domain are restricted, and a case in which the first frequency resource and the second frequency resource are deployed at an excessively long distance in frequency domain (for example, a center frequency of the first frequency resource is excessively far away from a center frequency of the second frequency resource) is avoided. Therefore, power consumption or complexity of a terminal device can be controlled.

For example, a bandwidth occupied by a wake-up signal may be the same as or different from a bandwidth occupied by a synchronization signal. This is not limited in embodiments of this application.

For example, a first bandwidth corresponding to the wake-up signal is the same as a second bandwidth corresponding to the synchronization signal. The first bandwidth is a sum of the bandwidth occupied by the wake-up signal and a guard band of the wake-up signal, and the second bandwidth is a sum of the bandwidth occupied by the synchronization signal and a guard band of the synchronization signal.

It may be understood that, in this case, when the center frequency of the first frequency resource is the same as that of the second frequency resource, a resource that is easy to be scheduled can be reserved for another signal (for example, an NR signal). This helps reduce scheduling complexity of an access network device.

For example, in the total bandwidth, sending of another signal may be allowed, or sending of another signal may not be allowed. The another signal is another signal other than the LP-WUS and the LP-SS.

FIG. 9a is a diagram in which sending of another signal is not allowed in a total bandwidth, and FIG. 9b is a diagram in which sending of another signal is allowed in a total bandwidth.

For example, when sending of another signal is not allowed in the total bandwidth, the terminal device may determine, based on the total bandwidth, one receive bandwidth to receive the LP-SS and the LP-WUS, and does not need to adjust a frequency location of the receive bandwidth. Therefore, complexity of the terminal is low. For example, in FIG. 9a, the terminal device may receive the LP-SS and the LP-WUS based on resources in a dashed box.

For example, when sending of another signal is allowed in the total bandwidth, the terminal device may separately receive the LP-SS and the LP-WUS by using two small bandwidths, and an unused resource may be used to transmit another signal, thereby avoiding a waste of resources.

The following describes in detail frequency resource configuration of the wake-up signal and the synchronization signal.

In a possible implementation, the access network device sends first configuration information and second configuration information.

For example, the first configuration information indicates the center frequency of the first frequency resource, and the second configuration information indicates one of a start frequency unit, an end frequency unit, or a bandwidth of the second frequency resource; or the first configuration information indicates the center frequency of the second frequency resource, and the second configuration information indicates one of a start frequency unit, an end frequency unit, or a bandwidth of the first frequency resource.

The first configuration information or the second configuration information further indicates the difference between the center frequency of the first frequency resource and the center frequency of the second frequency resource.

For example, the start frequency unit or the end frequency unit may be an RB or an RE. This is not limited in embodiments of this application.

That the first configuration information indicates the center frequency of the first frequency resource may include two implementations: direct indication and indirect indication.

In a possible implementation, the first configuration information includes first indication information, and the first indication information indicates the center frequency of the first frequency resource.

In another possible implementation, the first configuration information includes at least two of the start frequency unit, the end frequency unit, or the bandwidth of the first frequency resource.

Similarly, that the first configuration information indicates the center frequency of the second frequency resource may include two implementations: direct indication and indirect indication.

In a possible implementation, the first configuration information includes second indication information, and the second indication information indicates the center frequency of the second frequency resource.

In another possible implementation, the first configuration information includes at least two of the start frequency unit, the end frequency unit, or the bandwidth of the second frequency resource.

It may be understood that the access network device may configure two of a start frequency unit, an end frequency unit, or a bandwidth of one frequency resource. The terminal device determines a center frequency based on two of the start frequency unit, the end frequency unit, or the bandwidth of the frequency resource. When configuring the other frequency resource, the access network device may configure one of a start frequency unit, an end frequency unit, or a bandwidth, may determine a center frequency of the other frequency resource based on a difference between the two center frequencies, and may determine the other frequency resource based on the center frequency and one of the start frequency unit, the end frequency unit, or the bandwidth.

In another example, the first configuration information indicates two of a start frequency unit, an end frequency unit, or a bandwidth of the first frequency resource, and the second configuration information indicates two of a start frequency unit, an end frequency unit, or a bandwidth of the second frequency resource.

It may be understood that the terminal device determines the first frequency resource based on two of the start frequency unit, the end frequency unit, or the bandwidth of the first frequency resource, and determines the second frequency resource based on two of the start frequency unit, the end frequency unit, or the bandwidth of the second frequency resource.

It may be understood that the first configuration information and the second configuration information may be configured by using same configuration information, or may be separately configured by using two pieces of configuration information. This is not limited in embodiments of this application.

In a possible implementation, the access network device sends third configuration information.

The third configuration information indicates the guard band of the wake-up signal and/or the guard band of the synchronization signal.

For example, when the first bandwidth corresponding to the wake-up signal is the same as the second bandwidth corresponding to the synchronization signal, the third configuration information may be used to configure a guard band of one signal (one of the wake-up signal or the synchronization signal). Correspondingly, the terminal device may determine, based on the first bandwidth corresponding to the wake-up signal being the same as the second bandwidth corresponding to the synchronization signal, a guard band of the other signal (the other one of the wake-up signal or the synchronization signal).

In this solution, for a configuration manner of the third configuration information, refer to the foregoing descriptions. Details are not described again.

It should be noted that, for different receivers, for example, a non-coherent receiver based on non-I/Q and a coherent receiver based on I/Q, frequency resource configurations of the LP-SS and the LP-WUS are different.

For the non-coherent receiver based on non-I/Q (for example, the OOK receiver described above), an envelope detection receiver only needs to perform synchronization (for example, based on the LP-SS) or demodulation (for example, based on the LP-WUS) based on an ON/OFF pattern of an OOK symbol. An unused resource in a receive resource is reserved and is not for sending another NR signal, so that no additional interference is introduced. Relative locations of the LP-SS and LP-WUS may not be required.

For the coherent receiver based on I/Q (for example, the OFDM receiver described above), relative locations of the LP-SS and the LP-WUS need to be known, to determine a relative location of the LP-SS relative to a receive bandwidth of the LP-SS and a relative location of the LP-WUS relative to a receive bandwidth of the LP-WUS. In this way, a local sequence is generated based on the relative locations, for performing correlation in time domain.

S720: Receive the wake-up signal on the first frequency resource, and receive the synchronization signal on the second frequency resource.

In step S720, the terminal device receives the wake-up signal via a first circuit by using the first frequency resource, and receives the synchronization signal via the first circuit by using the second frequency resource.

Before receiving the wake-up signal and the synchronization signal, the terminal device may determine the first frequency resource and the second frequency resource.

In a possible implementation, the terminal device receives the first configuration information and the second configuration information, and determines the first frequency resource and the second frequency resource based on the first configuration information and the second configuration information. For a specific determining manner, refer to the descriptions of S710. Details are not described again.

Optionally, the terminal device receives the third configuration information, and determines the guard band of the wake-up signal and the guard band of the synchronization signal based on the third configuration information.

For example, the terminal device may receive the wake-up signal and the synchronization signal by using a same bandwidth.

For example, as shown in FIG. 8a, the center frequency of the first frequency resource is the same as that of the second frequency resource, and the terminal device may determine a large bandwidth to receive the LP-WUS and the LP-SS. For example, the bandwidth of the LP-WUS may be used as a receive bandwidth. The terminal device does not need to adjust the bandwidth based on different received signals, and complexity of the terminal device is reduced.

For example, as shown in FIG. 9a, the total bandwidth of the first frequency resource and the second frequency resource is less than or equal to the second threshold, and the terminal device may determine a large bandwidth to receive the LP-SS and the LP-WUS. For example, the total bandwidth may be used as a receive bandwidth. The terminal device does not need to adjust the bandwidth based on different received signals, and complexity of the terminal device is reduced.

For example, the terminal device may receive the wake-up signal and the synchronization signal by using different bandwidths.

For example, as shown in FIG. 8b, the center frequency of the first frequency resource is the same as that of the second frequency resource, and the first frequency resource is different from the second frequency resource. The terminal device may receive the LP-WUS based on a transmit bandwidth corresponding to the first frequency resource, and the terminal device may receive the LP-SS based on a transmit bandwidth corresponding to the second frequency resource. When receiving the LP-SS and the LP-WUS, the terminal device needs to adjust a receive bandwidth and a receiving frequency location based on different received signals, but a vacant location may be used to transmit another signal, so that a waste of resources can be avoided.

For example, as shown in FIG. 9b, the total bandwidth of the first frequency resource and the second frequency resource is less than or equal to the second threshold. The terminal device may receive the LP-WUS based on a transmit bandwidth corresponding to the first frequency resource, and the terminal device may receive the LP-SS based on a transmit bandwidth corresponding to the second frequency resource. When receiving the LP-SS and the LP-WUS, the terminal device needs to adjust a receive bandwidth and a receiving frequency location based on different received signals, but a vacant location may be used to transmit another signal, so that a waste of resources can be avoided.

In the foregoing technical solution, relative deployment locations of the frequency resource of the wake-up signal and the frequency resource of the synchronization signal are defined, to control power consumption or complexity of the terminal device.

It may be understood that, in embodiments of this application, "receiving" may alternatively be replaced with "detecting", "reading", or "monitoring". For example, "receiving a wake-up signal" may alternatively be replaced with "detecting a wake-up signal", "reading a wake-up signal", or "monitoring a wake-up signal".

It may be further understood that, in some of the foregoing embodiments, signal sending is mentioned a plurality of times. That A sends a signal to B is used as an example. That A sends the signal to B may include that A directly sends the signal to B, or may include that A sends the signal to B via another device or network element. This is not limited.

It may be further understood that, in some of the foregoing embodiments, the pre-agreement and the pre-definition are mentioned a plurality of times, and a person skilled in the art should understand meanings of the pre-agreement and the pre-definition. The pre-definition indicates that pre-definition is performed in a standard protocol. The pre-agreement indicates that devices pre-agree or pre-negotiate with each other. For example, a threshold (for example, a first threshold or a second threshold) is pre-agreed on, which indicates that a value of the threshold is pre-agreed on between devices (for example, between an access network device and a terminal device).

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that, in the foregoing method embodiments, the method and the operation implemented by the terminal device may alternatively be implemented by a component (for example, a chip or a circuit) of the terminal device. In addition, the method and the operation implemented by the network device may alternatively be implemented by a component (for example, a chip or a circuit) of the network device. This is not limited.

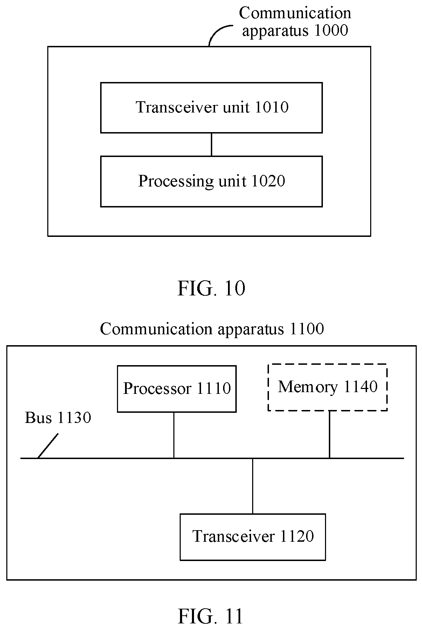

The methods provided in embodiments of this application are described above in detail with reference to FIG. 7 to FIG. 9. The apparatuses provided in embodiments of this application are described below in detail with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein.

For example, FIG. 10 is a diagram of a communication apparatus 1000 according to an embodiment of this application.

The apparatus 1000 includes a transceiver unit 1010 and a processing unit 1020. The transceiver unit 1010 may be configured to implement a corresponding communication function, and the processing unit 1020 may be configured to perform data processing.

Optionally, the transceiver unit 1010 may also be referred to as a communication interface or a communication unit, and includes a sending unit and/or a receiving unit. The transceiver unit 1010 may be a transceiver (including a transmitter and/or a receiver), an input/output interface (including an input interface and/or an output interface), a pin, a circuit, or the like. The transceiver unit 1010 may be configured to perform a sending step and/or a receiving step in the foregoing method embodiments.

Optionally, the processing unit 1020 may be a processor (may include one or more processors), a processing circuit having a processor function, or the like, and may be configured to perform a step other than sending and receiving in the foregoing method embodiments.

Optionally, the apparatus 1000 further includes a storage unit. The storage unit may be a memory, an internal storage unit (for example, a register or a cache), an external storage unit (for example, a read-only memory or a random access memory), or the like. The storage unit is configured to store instructions. The processing unit 1020 executes the instructions stored in the storage unit, so that the communication apparatus performs the foregoing methods.

In a first possible design, the apparatus 1000 may be configured to perform actions performed by a network device (for example, an access network device) in the foregoing method embodiments. For example, the apparatus 1000 may be configured to perform actions performed by the network device in the foregoing method 700. In this case, the apparatus 1000 may be a component of the network device. The transceiver unit 1010 is configured to perform a receiving/sending-related operation on a network device side in the foregoing method embodiments, and the processing unit 1020 is configured to perform a processing-related operation on the network device in the foregoing method embodiments.

In a possible implementation, the transceiver unit 1010 is configured to send a wake-up signal on a first frequency resource, where the wake-up signal is used to wake up at least one terminal device. The transceiver unit 1010 is further configured to send a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

It should be understood that the transceiver unit 1010 and the processing unit 1020 may further perform other operations performed by the access network device in the method 700. Details are not described herein again.

In a second possible design, the apparatus 1000 may be configured to perform actions performed by a terminal device in the foregoing method embodiments. For example, the apparatus 1000 may be configured to perform actions performed by the terminal device in the foregoing method 700. In this case, the apparatus 1000 may be a component of the terminal device. The transceiver unit 1010 is configured to perform a receiving/sending-related operation on a terminal device side in the foregoing method embodiments. The processing unit 1020 is configured to perform a processing-related operation on the terminal device in the foregoing method embodiments.

In a possible implementation, the transceiver unit 1010 is configured to receive a wake-up signal on a first frequency resource, where the wake-up signal is used to wake up at least one terminal device. The transceiver unit 1010 is further configured to receive a synchronization signal on a second frequency resource, where a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

It should be understood that the transceiver unit 1010 and the processing unit 1020 may further perform other operations performed by the terminal device in the method 700. Details are not described herein again.

It should be understood that a specific process in which the units perform the foregoing corresponding steps is described in detail in the foregoing method embodiments. For brevity, details are not described herein again.

It should be further understood that, the apparatus 1000 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the communication apparatus in the foregoing embodiments, and may be configured to perform procedures and/or steps corresponding to the communication apparatus in the foregoing method embodiments. To avoid repetition, details are not described herein again.

The apparatus 1000 in each of the foregoing solutions has a function of implementing corresponding steps performed by the communication apparatus (for example, the transmit end device or the receive end device) in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and related processing operations in the method embodiments.

In addition, the transceiver unit 1010 may alternatively be a transceiver circuit (for example, the transceiver circuit may include a receiving circuit and a sending circuit), and the processing unit may be a processing circuit.

It should be noted that the apparatus in FIG. 10 may be the communication device (for example, the terminal device or the network device) in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

For example, FIG. 11 is a diagram of a communication architecture according to an embodiment of this application. The communication apparatus 1100 shown in FIG. 11 includes a processor 1110 and a transceiver 1120. Optionally, the processor 1110 and the transceiver 1120 may be connected to each other through a bus 1130. The communication apparatus 1100 may be a terminal device or a network device.

Optionally, the communication apparatus 1100 may further include a memory 1140. The memory 1140 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1140 is configured to store related instructions and data.

The processor 1110 is coupled to the memory 1140, and is configured to execute instructions stored in the memory 1140, to control the transceiver 1120 to send a signal and/or receive a signal.

It should be understood that, the processor 1110 and the memory 1140 may be combined into one processing apparatus, and the processor 1110 is configured to execute program code stored in the memory 1140 to implement the foregoing functions. During specific implementation, the memory 1140 may alternatively be integrated into the processor 1110, or may be independent of the processor 1110. It should be understood that, the processor 1110 may alternatively correspond to each processing unit in the foregoing communication apparatus, and the transceiver 1120 may correspond to each receiving unit and sending unit in the foregoing communication apparatus.

It should be further understood that, the transceiver 1120 may include a receiver (or referred to as a receiver machine) and a transmitter (or referred to as a transmitter machine). The transceiver may further include an antenna, and there may be one or more antennas. The transceiver may alternatively be a communication interface or an interface circuit.

Specifically, the communication apparatus 1100 may correspond to the access network device in the method 700 according to embodiments of this application. The communication apparatus 1100 may include units of the methods performed by the access network device in the method 700. It should be understood that a specific process in which the units perform the foregoing corresponding steps is described in detail in the foregoing method embodiments. For brevity, details are not described herein again.

Specifically, the communication apparatus 1100 may correspond to the terminal device in the method 700 according to embodiments of this application. The communication apparatus 1100 may include units of the methods performed by the terminal device in the method 700. It should be understood that a specific process in which the units perform the foregoing corresponding steps is described in detail in the foregoing method embodiments. For brevity, details are not described herein again.

When the communication apparatus 1100 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be completed through a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be completed through a hardware integrated logic circuit in the processor, or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

In embodiments of this application, the term "example", "for example", or the like is used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that, in embodiments of this application, terms "include", "comprise", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a wake-up signal on a first frequency resource, wherein the wake-up signal is used to wake up at least one terminal device; and
sending a synchronization signal on a second frequency resource, wherein a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

2. The method according to claim 1, wherein the total bandwidth is determined based on a smallest frequency resource index and a largest frequency resource index, the smallest frequency resource index is a smallest frequency resource index of the first frequency resource and the second frequency resource, and the largest frequency resource index is a largest frequency resource index of the first frequency resource and the second frequency resource.

3. The method according to claim 2, wherein that the total bandwidth of the first frequency resource and the second frequency resource is less than or equal to the second threshold comprises:
a bandwidth indicated by the smallest frequency resource index and the largest frequency resource index is less than or equal to the second threshold.

4. The method according to claim 1, wherein the center frequency of the first frequency resource is the same as the center frequency of the second frequency resource, and the first threshold is 0.

5. The method according to any one of claims 1 to 4, wherein
a first bandwidth corresponding to the wake-up signal is the same as a second bandwidth corresponding to the synchronization signal, wherein the first bandwidth is a sum of a bandwidth occupied by the wake-up signal and a guard band of the wake-up signal, and the second bandwidth is a sum of a bandwidth occupied by the synchronization signal and a guard band of the synchronization signal.

6. The method according to any one of claims 1 to 5, wherein the bandwidth occupied by the synchronization signal is less than the bandwidth occupied by the wake-up signal.

7. The method according to any one of claims 1 to 6, wherein the method further comprises:
sending first configuration information and second configuration information, wherein
the first configuration information indicates the center frequency of the first frequency resource, and the second configuration information indicates one of a start frequency unit, an end frequency unit, or a bandwidth of the second frequency resource; or the first configuration information indicates the center frequency of the second frequency resource, and the second configuration information indicates one of a start frequency unit, an end frequency unit, or a bandwidth of the first frequency resource.

8. The method according to claim 7, wherein the total bandwidth of the first frequency resource and the second frequency resource is less than or equal to the second threshold, and the method further comprises:
the first configuration information or the second configuration information further indicates the difference between the center frequency of the first frequency resource and the center frequency of the second frequency resource.

9. The method according to any one of claims 1 to 8, wherein the method further comprises:
sending third configuration information, wherein the third configuration information indicates the guard band of the wake-up signal or the guard band of the synchronization signal.

10. The method according to any one of claims 1 to 9, wherein the wake-up signal is a low-power wake-up signal LP-WUS, and the synchronization signal is a low-power synchronization signal LP-SS.

11. A communication method, comprising:
receiving a wake-up signal on a first frequency resource, wherein the wake-up signal is used to wake up at least one terminal device; and
receiving a synchronization signal on a second frequency resource, wherein a difference between a center frequency of the first frequency resource and a center frequency of the second frequency resource is less than or equal to a first threshold, and/or a total bandwidth of the first frequency resource and the second frequency resource is less than or equal to a second threshold, and on-off keying OOK modulation is used for the wake-up signal and the synchronization signal.

12. The method according to claim 11, wherein the total bandwidth is determined based on a smallest frequency resource index and a largest frequency resource index, the smallest frequency resource index is a smallest frequency resource index of the first frequency resource and the second frequency resource, and the largest frequency resource index is a largest frequency resource index of the first frequency resource and the second frequency resource.

13. The method according to claim 2, wherein that the total bandwidth of the first frequency resource and the second frequency resource is less than or equal to the second threshold comprises:
a bandwidth indicated by the smallest frequency resource index and the largest frequency resource index is less than or equal to the second threshold.

14. The method according to claim 10, wherein the center frequency of the first frequency resource is the same as the center frequency of the second frequency resource, and the first threshold is 0.

15. The method according to any one of claims 11 to 14, wherein
a first bandwidth corresponding to the wake-up signal is the same as a second bandwidth corresponding to the synchronization signal, wherein the first bandwidth is a sum of a bandwidth occupied by the wake-up signal and a guard band of the wake-up signal, and the second bandwidth is a sum of a bandwidth occupied by the synchronization signal and a guard band of the synchronization signal.

16. The method according to any one of claims 11 to 15, wherein the bandwidth occupied by the synchronization signal is less than the bandwidth occupied by the wake-up signal.

17. The method according to any one of claims 11 to 16, wherein the method further comprises:
receiving first configuration information and second configuration information, wherein the first configuration information indicates a center frequency of a frequency resource for sending the wake-up signal, and the second configuration information indicates one of a start frequency-domain unit, an end frequency unit, or a bandwidth of a frequency resource for sending the synchronization signal; or the first configuration information indicates a center frequency of a frequency resource for sending the synchronization signal, and the second configuration information indicates one of a start frequency-domain unit, an end frequency unit, or a bandwidth of a frequency resource for sending the wake-up signal; and
determining the first frequency resource and the second frequency resource based on the first configuration information and the second configuration information.

18. The method according to claim 17, wherein the total bandwidth of the first frequency resource and the second frequency resource is less than or equal to the second threshold; and
the first configuration information or the second configuration information further indicates the difference between the center frequency of the first frequency resource and the center frequency of the second frequency resource.

19. The method according to any one of claims 11 to 18, wherein the method further comprises:
receiving third configuration information; and
determining the guard band of the wake-up signal and the guard band of the synchronization signal based on the third configuration information.

20. The method according to any one of claims 11 to 19, wherein the wake-up signal is a low-power wake-up signal LP-WUS, and the synchronization signal is a low-power synchronization signal LP-SS.

21. A communication apparatus, comprising a module or a unit configured to perform the method according to any one of claims 1 to 20.

22. A communication apparatus, comprising a processor, wherein the processor is configured to perform the method according to any one of claims 1 to 20.

23. A computer-readable storage medium, wherein the computer-readable storage medium stores a computer program or instructions, and when the computer program or the instructions are run on a communication apparatus, the communication apparatus is caused to perform the method according to any one of claims 1 to 20.

24. A computer program product, wherein the computer program product comprises a computer program or instructions used to perform the method according to any one of claims 1 to 20.
